# EUROPÄISCHE PATENTSCHRIFT

(11) **EP 0 678 728 B1**
(45) Veröffentlichungstag und Bekanntmachung des Hinweises auf die Patenterteilung: **01.03.2000**
(21) Anmeldenummer: 94110156.0
(22) Anmeldetag: 30.06.1994
(51) Int. Cl.: G01B 13/24, B21D 39/20

(54) **Verfahren zur Kontrolle eines hydraulischen Aufweitvorganges bei einer Hülse-/Rohrverbindung**
Procedure to control the hydraulic enlargement in a coupling between a socket and a tube
Procédé pour contrôler l'élargissement hydraulique dans l'accouplement entre une douille et un tube

(30) Priorität: 15.04.1994 DE 4412992
(43) Veröffentlichungstag der Anmeldung: 25.10.1995
(73) Patentinhaber: ABB Reaktor GmbH, D-68167 Mannheim (DE)
(72) Erfinder: Russ, Jakob, D-67354 Römerberg (DE); Majumdar, Abdullah-El-Baqui, Dr., D-68165 Mannheim (DE)
(74) Vertreter: Rupprecht, Klaus, Dipl.-Ing.

(56) Entgegenhaltungen:
- EP-A- 0 041 835
- US-A- 5 062 199

## Beschreibung

Die Erfindung betrifft ein Verfahren zur Kontrolle eines hydraulischen Aufweitvorganges bei einer metallischen Hülse-/Rohrverbindung nach dem Oberbegriff des Patentanspruchs.

Ein derartiges Verfahren ist aus der EP 0 041 835 A2 bekannt. Danach soll die Aufweitung des Rohraußendurchmessers auf höchstens 0,15 mm beschränkt werden. Zum Erreichen dieses Zieles wird beim Beginn des plastischen Fließens des Werkstoffes der Aufweitvorgang beendet.

Die Kontrolle des Verformungsgrades von Hülse und Rohr während und nach dem Aufweitvorgang läßt sich bei derartigen Aufweitverfahren wegen der schlechten Zugänglichkeit der Wärmetauscherrohre nur unter erschwerten Bedingungen oder überhaupt nicht durchführen. Über den Druckwert der Hydraulikflüssigkeit ist eine Kontrolle nur dann möglich, wenn das Rohr und die Hülse in ihren Wanddicken und in ihren Festigkeitswerten eine Musterverbindung zwischen Hülse und Rohr entspricht, die zur Einstellung des für die Verformung des Rohres erforderlichen Druckes der Hydraulikflüssigkeit dient. Weichen Festigkeit und Wandstärke des Rohres oder der Hülse von den Sollwerten ab, entsteht entweder eine mangelhafte Verbindung zwischen Hülse und Rohr oder eine zu Schäden führende Überdehnung der Rohrwand.

Es stellt sich die Aufgabe ein Verfahren der eingangs genannten Art anzugeben, das die Einhaltung der gegebenen Dehnungswerte gewährleistet.

Gelöst wird diese Aufgabe erfindungsgemäß dadurch, daß nach Erreichen eines Indi katorpunktes der weitere Verlauf der Aufweitung von Hülse und/oder Rohr allein vom zugeführten Volumen der Hydraulikflüssigkeit bestimmt wird.

Mit diesen Maßnahmen werden Schäden an Rohren unterschiedlicher Festigkeit vermieden, da ein Aufweitvorgang beendet wird, wenn das entsprechende Volumen an Hydraulikflüssigkeit eingespeist ist und nicht etwa bei Erreichen eines vorgegebenen Druckwertes. Die Indikatorpunkte gewährleisten eine zuverlässige Ermittlung des nachfolgend zugeführten Volumens an Hydraulikflüssigkeit, da nach Erreichen des je weiligen Indikatorpunktes unmittelbar die Messung des zuzuführenden Volumens beginnt.

Anhand von Ausführungsbeispielen und den schematischen Zeichnungen Figur 1 bis 3 wird das erfindungsgemäße Verfahren beschrieben.

Dabei zeigt die
- Fig. 1: eine Rohr/Hülsenanordnung mit einer eingeführten Hydrauliksonde vor dem Aufweitvorgang,
- Fig. 2: eine Rohr-/Hülsenanordnung nach erfolgter Aufweitung und
- Fig. 3: ein Druck-/Volumendiagramm eines Aufweitvorganges.

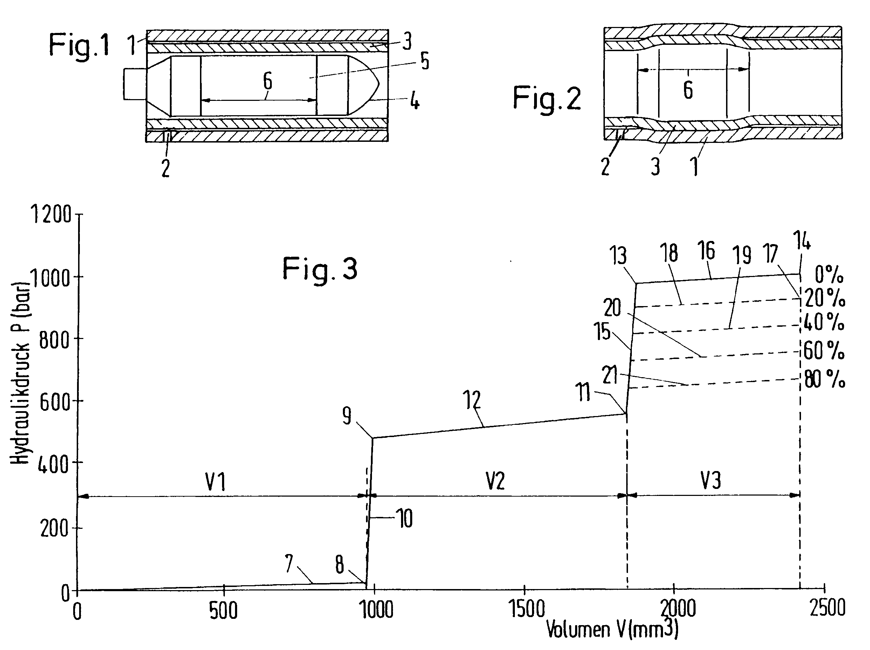

Die Figur 1 zeigt einen Teilbereich eines Rohres 1 eines nicht dargestellten Wärmetauschers, das eine Leckagestelle 2 aufweist. In das Rohr 1 ist eine ebenfalls nur teilweise dargestellte Hülse 3 eingeführt, wobei zwischen Hülse und Rohr ein Spiel vorhanden ist, das in Abhängigkeit der Fertigungstoleranzen schwanken kann. Eine Hydrauliksonde 4 ist unter Einhaltung eines Spiels soweit in die Hülse 3 eingeführt, daß der Kartuschenteil 5 der Hydrauliksonde 4 den vorgesehenen Aufweitbereich 6 übergreift.

Aus der Figur 2 ist zu sehen, daß nach der erfolgten Aufweitung eine bleibende Verformung an Rohr 1 und Hülse 3 aufgetreten ist. Unterhalb der Leckagestelle 2 erfährt das Rohr und die Hülse die gleiche, aber nicht dargestellte Aufweitung, so daß die Leckagestelle von zwei Aufweitbereichen 6 eingeschlossen ist.

Der Ablauf eines Aufweitvorganges unter Volumenkontrolle ist in der Figur 3 dargestellt. Auf der Abszisse ist das Volumen an Hydraulikflüssigkeit beim Aufweitvorgang aufgetragen, das in die Hydrauliksonde 4 eingespeist wird. Die Ordinate zeigt den jeweilig herrschenden Hydraulikdruck. Das Druck-/Volumendiagramm stellt eine den jeweiligen Gegebenheiten (z.B. Wandstärke, Festigkeit, Spiel) einer Rohr-/Hülsenpaarung entsprechenden Ablauf des Aufweitvorganges dar. Es wird anhand einer Schreiberaufzeichnung dargestellt, so daß sich damit der Ablauf eines Aufweitvorganges verfolgen läßt.

Eine sanft ansteigende Schräge 7 symbolisiert das Aufweiten des Kartuschenteils 5 bis zu dessen Anlage an der Innenumfangsfläche der Hülse 3. Die Anlage ist an einem Indikatorpunkt 8 des Diagramms erreicht, wobei in den Kartuschenteil 5 Hydraulikflüssigkeit mit einem Volumen V1 von ca. 950 mm³ eingeleitet worden ist, was zu einem Innendruck des Kartuschenteils von ca. 20 bar führt.

Ab diesem Indikatorpunkt 8 steigt die den Aufweitvorgang unmittelbar darstellende X-Y-Schreiberaufzeichnung im Kurvenbereich 10 entsprechend dem elastischen Verhalten der Hülse 3 steil nach oben. Dieser scharfe Übergang am Indikatorpunkt 8 markiert den Beginn der Hülsenaufweitung und ist visuell oder im Rahmen einer computergesteuerten Überwachung sofort zu erkennen. Die weitere Aufweitung der Hülse über ihren beim Diagrammpunkt 9 endenden elastischen Bereich hinaus bis zu ihrem durch den Kurventeil 12 symbolisierten plastischen Bereich läuft somit mit Hilfe des vorgebenen Volumens volumenkontrolliert ab, wobei der begleitende Hydraulikdruck beim Aufweitverfahren nicht maßgeblich ist und lediglich zur Orientierung dient.

Der in der das Druck-/Volumendiagramm darstellende X-Y-Schreiberaufzeichnung angezeigte Indikatorpunkt 11 weist auf einen steilen Anstieg des Kurventeils 15 hin. Der Beginn des steilen Anstiegs wird entweder visuell oder computergesteuert sofort erkannt, so daß nach Registrierung dieses Indikatorpunktes 11 noch so viel Volumen an Hydraulikflüssigkeit (Volumen 3) zugeführt wird, wie zum Erreichen der vorgeschriebenen Dehnung des Rohres erforderlich ist. Wird zum Einspeisen der Hydraulikflüssigkeit ein Hochdruckzylinder verwendet, so entspricht das erforderliche Volumen einem bestimmten Kolbenhub. Über ein dem Hochdruckzylinder zugeordnetes geeichtes Förderaggregat läßt sich das notwendige Volumen beisteuern und gegebenenfalls computergesteuert überwachen. Nach diesem Ausführungsbeispiel bleiben Toleranzen in den Abmessungen von Hülse und Rohr ohne Einfluß, da der jeweilige Indikatorpunkt bei spielfreier Anlage zwischen Hülse und Rohr ermittelt wird. Die Steuerung der Rohraufweitung über das Volumen V3 gewährleistet, daß keine unerwünschte Überdehnung des Rohres erfolgen kann.

Die Einleitung des als Kontrollvolumen dienenden Hydraulikvolumens V3 wird wiederum durch den scharfen, sofort erkennbarn Indikatorpunkt 11 markiert, ab dem ein Kurventeil 15, ähnlich wie bei der Hülsenaufweitung, steil nach oben entsprechend dem elastischen Verhalten des Rohres bis zum Diagrammpunkt 13 verläuft, da diesmal das Rohr mit aufgeweitet wird. Die weitere Aufweitung des Rohres 1 über seinen beim Diagrammpunkt 13 endenden, elastischen Bereich hinaus bis zu ihrem durch den Kurventeil 16 dargestellten plastischen Bereich, läuft somit ebenso wie bei der Hülse rein volumenkontrolliert ab, wobei der begleitende Hydraulikdruck beim Aufweitverfahren nicht maßgebend ist, und somit nur zur Orientierung dient. Die Volumenkontrolle stellt sicher, daß die plastische Verformung des Kurventeiles 16 mit dem Diagrammpunkt 15 nur bei einem Rohr 1 erfolgt, dessen Wandstärke und Festigkeit den Sollwerten entspricht. Dem Kurventeil 16 mit seinem Diagrammpunkt 14 ist dasher der Index 0% für eine nicht vorhandene Wanddickenschwächung zugeordnet.

Weist das Rohr 1 beispielsweise eine Wanddickenschwächung von 20% auf, so ist die zulässige Rohrdehnung im Rahmen der plastischen Verformung bereits bei dem Diagrammpunkt 17 erreicht. Der Druckanstieg für die plastische Verformung des Rohres 1 wird dabei durch den Kurventeil 18 dargestellt, dem auch der Index 20% für eine 20%-ige Wanddickenschwächung zugeordnet ist. Die Kurventeile 19, 20 und 21 symbolisieren jeweils einen geringer ausfallenden Druckanstieg für eine Wanddickenschwächung von 40% bis 80%. Diese Beispiele zeigen, daß durch die volumengesteuerte Rohraufweitung auch bei einer Wanddickenschwächung und/oder bei Schwankungen in den Festigkeitswerten keine unerwünschte Überdehnung des Rohres 1 erfolgen kann.

## Patentansprüche

1. Verfahren zur Kontrolle eines hydraulischen Aufweitvorganges bei einer metallischen Hülse-/Rohrverbindung, wobei die Hülse (3) über eine mit Hydraulikflüssigkeit beaufschlagte Hydrauliksonde (4) an die Rohrinnenwand angelegt, die Hülse (3) und das Rohr (1) in einem vorgebbaren Aufweitbereich (6) nach Durchlaufen des elastischen Bereiches bis in ihren plastischen Bereich verformt werden und daß an Indikatorpunkten (9, 11, 13) eines druckabhängigen Kurvenverlaufs der Beginn des plastischen Bereichs von Hülse und/oder Rohr festgestellt wird, dadurch gekennzeichnet, daß nach Erreichen eines Indikatorpunktes (9, 11, 13) der weitere Verlauf der Aufweitung von Hülse und/oder Rohr allein vom zugeführten Volumen der Hydraulikflüssigkeit bestimmt wird.

## Claims

1. A method for controlling a hydraulic expansion process in a metallic jointing sleeve/pipe connection, with the sleeve (3) being placed on the inside wall of the pipe by way of a hydraulic probe (4) which is pressurised with hydraulic liquid, the sleeve (3) and the pipe (1) being deformed up to their plastic range within a pre-determinable expansion range (6) following the passage through the elastic range and the beginning of the plastic range of the sleeve/pipe is determined at indicator points (9, 11, 13) of a pressure-dependent characteristic, characterised in that after reaching an indicator point (9, 11, 13) the further course of the expansion of the sleeve/pipe is determined alone by the supplied volume of the hydraulic liquid.

## Revendications

1. Procédé pour contrôler une opération d'expansion hydraulique lors de l'établissement d'un raccordement douille/tube métallique, la douille (3) étant appliquée à l'aide d'une sonde hydraulique (4) sollicitée à l'aide de liquide hydraulique contre la paroi intérieure du tube, la douille (3) et le tube (1) étant déformés, dans une zone d'expansion (6) prédéterminable, au-delà de la plage élastique jusque dans la plage plastique, et le début de la plage de déformation plastique de la douille et/ou du tube étant décelé sur des points indicateurs (9, 11, 13) d'un tracé de courbe en fonction de la pression, caractérisé par le fait que lorsqu'un point indicateur (9, 11, 13) est atteint, la suite de l'expansion de la douille et/ou du tube est déterminée uniquement par le volume de liquide hydraulique envoyé à la sonde hydraulique.
